# EUROPEAN PATENT APPLICATION

(11) **EP 3 276 561 A1**
(43) Date of publication of application: **31.01.2018**
(21) Application number: 16305972.8
(22) Date of filing: 27.07.2016
(51) Int. Cl.: G06Q 30/00, G06Q 30/06, G01S 19/14

(54) **AUTHENTICATION TAG, DEVICE, SYSTEM AND METHOD**

(71) Applicant: Centre National d'Etudes Spatiales, 75039 Paris Cedex 01 (FR)
(72) Inventor: RIES, Lionel, 81290 VIVIERS LES MONTAGNES (FR); MARMET, François-Xavier, 31600 MURET (FR)
(74) Representative: Nguyen Van Yen, Christian

(57) **Abstract**

The invention discloses an authentication system of objects, physical or virtual, comprising an authentication mark and, as an option, an authentication message, generated by an authentication device and controlled by a verification/decoding device in combination with an authentication server managed by an authenticating authority. The authentication mark in the tag/message may comprise GNSS RF raw signals and/or GNSS raw data. The authentication mark comprises data and may be formatted, for example, in a bitstream, a data stream, a QRCode, an RFID tag or an NFC tag. The authentication server is configured to cause a GNSS signals simulator to reproduce the GNSS RF raw signals and/or GNSS raw data at the location and time interval of production of the object and to compare the results of the simulation to the authentication mark comprising data received directly from the authentication device or received from a verification device and issue a validation, a denial or a doubt from the comparison.

## Description

### FIELD OF THE INVENTION

The invention relates to an authentication tag comprising a stamp of a location and time of production or modification of an object, physical or virtual, or a service. The invention also relates to a device to produce a code and encode the tag and another device to decode the same, as well as to an authentication server to authenticate a tag.

### BACKGROUND

RF signals transmitted by navigation satellites in constellations (Global Navigation Satellites Systems or GNSS) provide information that allows a calculation of a position, velocity and time (PVT) at a place of reception of the signals.

Navigation receivers rely on L-Band RF signals transmitted by Medium Earth Orbiting satellites, which are generally included in constellations comprising tens of them to cover most of the surface of the earth, such as the GPS™ (US), Galileo™ (Europe), Glonass™ (Russia) and Beidou™ (China). These constellations are designated under the generic acronym of GNSS (Global Navigation Satellite System).

GNSS carrier signals are modulated by a pseudo-random code and a navigation message that allow calculation of a pseudo-range between the receiver and a specific satellite. With a minimum of four pseudo-ranges, it is possible to calculate the PVT of the receiver. In receivers of the type used by consumers, such as those embedded in a car navigation system or a smart phone, the position information is the one which is directly used to compute the navigation solution.

This PVT can be used to authenticate the location of an antenna or a receiver capable of capturing/processing these signals. By way of example of multiple applications of this technology to a proof of authentication of a place of production of a good, a location of manufacturing of a good may thus be captured and encoded in a tag of the RFID, NFC or QR Code type. Then, the customs officers of a country or controllers commissioned by a licensor of the technology used to produce the good will be able to check that the information contained in the tag is consistent with the import documentation or the license reports. If the object is a digital content (a movie, music, a game, a piece of software, etc.) the location of production of the content may be encoded as a stream of bits in the content itself.

Another example is a method to authenticate a place where a payment was made: the PVT of the location from where the payment was initiated may be appended to the transaction identification.

A third example is the authentication of a computer where a processing is performed: the PVT information at the location of the computer may be appended to the data produced by the computer equipment, or be published on a memory of the equipment. In certain computing architectures, applications may be prevented from executing on equipment which has not been authenticated by its PVT location.

A fourth example is the undertaking of a controlled maintenance operation where the authentication data may be made of the time and location at which the maintenance operation took place.

In all examples, the PVT information may be encrypted so that it cannot be tampered with, after having been affixed to the object.

But post-production encryption does not prevent the PVT information to be faked.... Indeed, since the carrier frequency, code structure and content of the navigation message of civilian satellite navigation systems are public information, it is not too difficult to generate faked navigation signals. One known way is to "spoof" the GNSS receiver: a plurality of RF transmitters (the "spoofers") generate faked navigation signals which are similar to regular navigation signals and are then processed by the receiver to produce a false PVT information. Because GNSS signals have a low Carrier to Noise (C/N0), the spoofers need not be very powerful and are thus not very costly to design and produce. Spoofing is generally combined with jamming: a jamming signal, more powerful than the incoming GNSS signal, is first sent from the spoofers so that the GNSS receiver is desynchronized from the regular GNSS signals and then acquires the spoofers' signals when the jamming stops; then the GNSS receiver receives and processes the faked signals from the spoofers.

For instance, the PCT application which was published under n° WO2016/034623, claiming the same inventor and applicant as the instant application, discloses a method whereby a pseudo-random control sequence is generated to configure a radiating diagram of the GNSS receiver antenna, the RF raw signals at the output of the antenna and raw data representative of some selected parameters of the RF raw signals being then compared to test the assumption that the signals come from spoofers with a fixed direction of arrival.

In such a configuration, the authentication is performed locally and is quite adequate for some spoofing scenarios, i.e. where there is a spoofer at a fixed location. If spoofing is performed in a more sophisticated manner, for instance from a squad of drones, local processing would require significant computing capabilities to be efficient. Also, it may not be wise to include the logic to authenticate the GNSS signals in equipment which may be accessed by people with malign intentions.

Known techniques exist to detect jamming or spoofing from a remote location. One of these, disclosed by US patent n°8,068,534, consists in taking samples of GNSS signals at a user receiver situated at a first location and correlating them with samples of signals received at a reference receiver situated at a second location, to confirm that the user receiver and the reference receiver have received a same encrypted code which is embedded therein without having to decode the same, thus authenticating the first signal. But this technique requires a number of reference receivers to be able to cover the surface of the earth.

There is therefore a need for a new authentication technique where the authentication does not require a plurality of reference receivers.

### SUMMARY OF THE INVENTION

The invention fulfils this need by providing an authentication mark comprising samples of one or more of GNSS RF raw signals or GNSS raw data, which may then be compared in an authentication server to simulated GNSS RF raw signals or GNSS raw data expected at the location and time where the tag is supposed to have been produced. The invention thus also provides an authentication encoding device, an authentication decoding device and an authentication server.

The invention discloses an authentication mark to authenticate one or more of locations or times of performance of one or more operations by one or more operating devices, said authentication mark comprising data representative of: identification of one or more authentication devices, each comprising a GNSS antenna and one or more GNSS signal processing channels, each authentication device associated with an authorized site of performance of an operation by an operating device; and a sample of one or more of GNSS raw RF signals or GNSS raw data captured from the one or more GNSS processing channels.

Advantageously, the sample of one or more of GNSS raw RF signals or GNSS raw data comprises data from which a time interval and a Doppler shift of a GNSS carrier from one or more satellites at a beginning and an end of the time interval may be extracted.

Advantageously, the authentication mark of the invention further comprises PVT of the one or more authentication devices.

Advantageously, the authentication mark of the invention is representative of a plurality of sites of performance of operations by said operating devices.

The invention further discloses an authentication tag comprising authentication mark according to some aspects of the invention, the authentication mark comprising data encoded in one or more of a bar code, a QR-Code, an RFID or an NFC format.

The invention further discloses a physical object, having combined therewith an authentication tag according to some aspects of the invention.

The invention further discloses an authentication location stamp comprising authentication mark according to some aspects of the invention, the authentication mark comprising data representative of one or more of locations or times of performance of one or more operations by one or more processing devices.

The invention further discloses a bitstream carrier, having combined therewith an authentication location stamp according to some aspects of the invention.

The invention also discloses an authentication device configured to produce authentication data of one or more of a location or a time interval of performance of an operation by an operating device, said authentication device comprising: a GNSS antenna assembly; one or more GNSS signal processing channels having one or more of GNSS RF raw signal output ports or GNSS raw data output ports; a controller configured to: i) capture samples of the one or more of GNSS RF raw signal and GNSS raw data at the output ports of the GNSS signals processing channels at the time interval and location of performance of the operation by the operating device; ii) generate an authentication mark comprising data representative of an identification of the authentication device and the samples of the one or more of GNSS RF raw signal and GNSS raw data; and an encoder configured to condition said authentication mark in one or more of an authentication tag, an authentication location stamp and an authentication message.

Advantageously, the controller comprises a secure processing unit with one or more of cryptographic or pseudo-random number generation (PRNG) functions.

Advantageously, a PRNG of the secure processing unit is used to generate control sequences to shape a variable radiating diagram at the GNSS antenna.

Advantageously, the GNSS signal processing channels are configured to use a variable intermediate frequency which is shifted from a baseband frequency by a variable offset, said variable offset being generated by a PRNG of the secure processing unit.

The invention also discloses an authentication server configured to authenticate an authentication mark representative of one or more of a location or a time of performance of an operation by an operating device, said authentication server comprising: an access to a database comprising identification data of authentication devices declared as being located at authorized sites of performance of operations by the operating device; an access to an authentication mark comprising data deemed to be representative of an identification of an authentication device, a time interval of production of said authentication data and of first one or more of GNSS RF raw signal or GNSS raw data captured during said time interval; an access to a GNSS signal simulator; first computer logic configured to retrieve from the database the location of the authentication device at the time of encoding and to cause the GNSS signal emulator to generate one or more of second GNSS RF raw signals or GNSS raw data corresponding to the location of the authentication device during the time interval; second computer logic configured to compare the first one or more of GNSS RF raw signal or GNSS raw data and the second one or more of GNSS RF raw signal or GNSS raw data and to determine whether the data in the authentication mark is likely to be authentic based on the output of the compare.

The invention also discloses a method of producing an authentication mark for authenticating one or more of locations or times of performance of one or more operations by one or more operating devices, the method comprising: capturing samples of one or more of GNSS RF raw signals and GNSS raw data at output ports of GNSS signals processing channels in an authentication device located at a time and location of performance of the one or more operations by the one or more operating devices; generating an authentication mark comprising data representative of an identification of the authentication device and the samples of the one or more of GNSS RF raw signal and GNSS raw data; and conditioning said authentication mark in one or more of an authentication tag, an authentication location stamp and an authentication message.

Advantageously, the authentication mark comprising data representative of a first operation comprises GNSS RF raw signals conditioned in an authentication message and are sent to an authentication server and the authentication mark comprising data representative of a second operation comprises GNSS raw data conditioned in one of an authentication tag or an authentication location stamp combined with a product of the second operation.

The invention also discloses a method for authenticating an authentication mark comprising data representative of one or more of locations or times of performance of one or more operations by one or more operating devices, said authentication method comprising: accessing a database comprising identification data of authentication devices located at authorized sites of performance of the one or more operations by the one or more operating devices; accessing an authentication mark comprising data deemed to be representative of an identification of an authentication device, a time interval of production of said authentication data and of first one or more of GNSS RF raw signal or GNSS raw data captured during said time interval; accessing a GNSS signal simulator; causing a first computing logic to retrieve from the database the location of the authentication device at the time of production of said authentication mark and to cause the GNSS signal simulator to generate one or more of second GNSS RF raw signals or GNSS raw data corresponding to the location of the authentication device during the time interval; causing a second computing logic to compare the first one or more of GNSS RF raw signal or GNSS raw data and the second one or more of GNSS RF raw signal or GNSS raw data and to determine whether the authentication mark is likely to be authentic based on the output of the compare.

Advantageously, according to some aspects of the invention, for authenticating a first authentication mark, further comprises receiving an authentication message from the authentication device wherein said authentication message comprises GNSS RF raw signals captured by the same authentication device at a time interval of performance of a second operation by the same operating device, said second operation having an identification in a same series as the identification of the first operation, wherein the authentication mark comprising data of the first operation comprises GNSS raw data and the authentication data of the second operation comprises GNSS RF raw signals and the second computing logic only outputs a validation for the first operation if it first ouputs a validation for the second operation.

### The invention is quite versatile.

At the encoding side, the invention may be implemented in a number of embodiments depending on the application and a cost/benefit analysis. A full GNSS receiver configuration may be provided. In some other embodiments, a simple GNSS antenna combined with an RF front-end and an encoding device may be provided. Physical protection may be provided, as well as a secure controller with possibly encryption/signature capabilities.

At the authentication server side, various configurations may be provided to simulate the expected GNSS RF raw signals or raw data.

The authentication server may be accessed remotely by persons authorized to control the authenticity of a tag. Various devices may be used to perform this control.

Authentication information of a plurality of production facilities may be enchained so that a trust certificate can be produced to cover the whole manufacturing/delivery process.

It is possible with the invention to authenticate series of goods, operations performed by operating devices, or virtual objects.

An operating device may be a manufacturing, maintenance or test equipment. It may also be a computer or telecommunication equipment. It may be any type of electronic device equipped or not with sensors, such as motion sensors, or sensors to measure a pressure, a temperature or another environmental parameter, such as a concentration of a substance in a gas or a liquid. A number of the operating devices to which the invention may be applied may be connected to a network of an Internet of Things type, the network being of a local area, wide area or metropolitan area type. The operating devices may be fixed or moving. In the description, the expression "operating device" will designate any of these equipments or devices in various operating environments.

The authentication method may be embodied in an authentication mark comprising authentication data. The authentication mark may be embodied in one of an authentication tag, an authentication location stamp or an authentication message or a combination thereof applied to a series of goods or virtual objects. In the description, the expression "authentication mark" will designate any of those, comprising authentication data, as explained further below.

The authentication method may combine the use of authentication messages comprising GNSS RF raw signals to an authentication server and of authentication tags affixed to a good or equipment/operating device to be authenticated or embedded as a bitstream in a virtual object.

### BRIEF DESCRIPTION OF THE DRAWINGS

The invention and its advantages will be better understood upon reading the following detailed description of a particular embodiment, given purely by way of nonlimiting example, this description being made with reference to the accompanying drawings in which:
- Figure 1 represents a general functional architecture of a system to implement the invention in a number of its embodiments;
- Figures 2a and 2b represent two different embodiments of the authentication device of the invention;
- Figures 3a and 3b represent flow charts of encoding processes according to two different embodiments of the invention;
- Figure 4 represents a flow chart of a verification process of an authentication tag in a decoding device of the invention in a number of its embodiments;
- Figure 5 represents a flow chart of a verification process of an authentication tag in an authentication server according to the invention in a number of its embodiments;
- Figures 6a, 6b and 6c illustrate combined authentication tags of the invention in a number of its embodiments.

### DETAILED DESCRIPTION

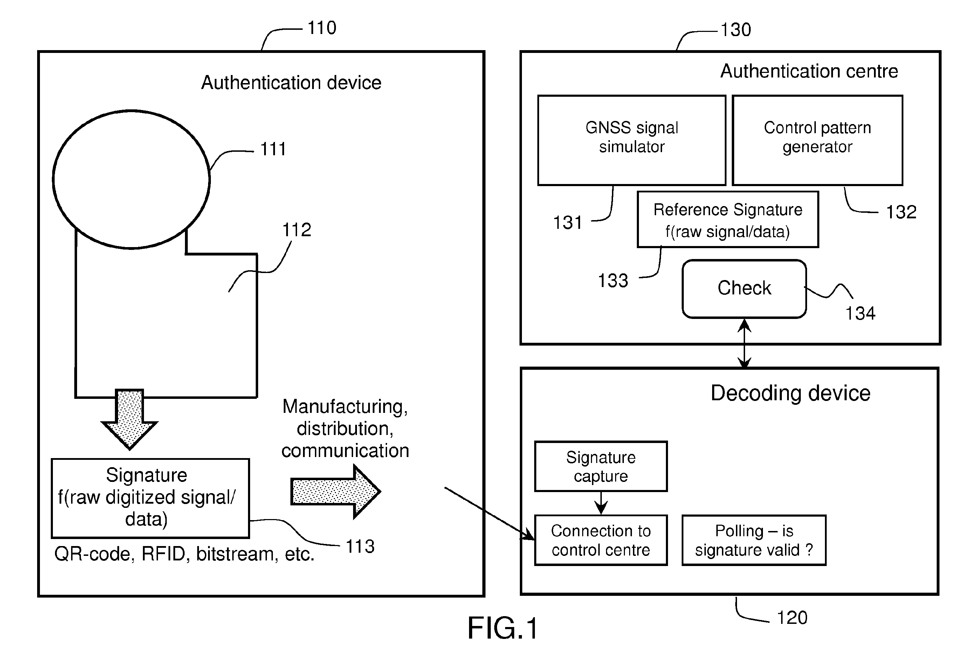

Figure 1 represents a general functional architecture of a system to implement the invention in a number of its embodiments.

According to some embodiments of the invention, a purpose of an authentication system is to produce authentication mark that will be used to track and/or mark physical or virtual objects to authenticate their time and/or place of production or transit. More generally, the invention may be applied to authenticate any type of operations performed by or to an operating device, be it a manufacturing, a maintenance or a processing equipment. The invention may also be applied to a chain of such operations.

The purpose may be mandated by a licensing entity in a licensing agreement with its manufacturing licensees or as part of a service provision agreement in the case of processing equipment. A first level of control that a good supposed to be produced under a license of an intellectual property right (IPR) is indeed an authentic good, consists in affixing authentication tags to the goods or their package. The tags may include codes which are proprietary to the licensor. Absence of the code will indicate a fake good.

But some licensees may combine production under the license (i.e. up to a volume that they declare to the licensor) and undeclared production. A second level of control is then to include serial numbers (or authorisation keys in the example of a copyrighted software) in the authentication tags, the serial numbers being related to a production facility. It i not always easy to check on the spot (at the customs or at a delivery premises of a distributor) that the serial numbers correspond to goods produced under the license. There is therefore a need to be able to easily track/mark manufactured goods and then check that they are produced under a license which is complied with.

Verification will be then performed either by private entities (distributors of the licensed goods, for instance) or governmental authorities (customs officers, police officers, health inspectors, etc.).

The purpose may not only apply to physical objects but also to virtual objects, such as audio or video content, communications, data files or streams, electronic payments or the like. The location where the said virtual objects are produced will have some impact on the applicable law regarding the production, distribution and consumption phases of the virtual object. Also, the location of the computing equipment processing the said virtual objects will determine jurisdiction of different national authorities to regulate privacy, government intercepts, retained data or infringement, among other important matters. Certification of a place and/or time of a validation of an operation by a processing device (i.e. executing a withdrawal in a banking Automatic Teller Machine (ATM), paying a purchase on-line or off-line, affixing an electronic signature having legal probative value on an electronic document) will significantly add to the overall security of electronic payments and electronic transactions in general and reduce the exposure of the banking and electronic document processing industries to the risk imparted by fraudulent transactions that they currently bear.

One such application to digital content is for instance for controlling that a specific content can only be decoded in a definite area. Such content may be transmitted through satellite, terrestrial TV broadcast or the Internet. Scrambling, which has the aim of restricting reception is often used to prevent non-subscribers from receiving broadcasts. Access to the content, which requires descrambling, is made conditional to the location of the users. Current solutions for conditional access systems use different schemes such as Entitlement control message (ECM) and Entitlement management messages (EMM). Internet solutions rely on other approaches such as Multicast or Unicast. If content must be restricted to a country a region or even to a specific location such as a building site, the IP address used to determine the location. However, faking IP addresses or Virtual Private Network (VPN) are known workarounds to access restricted content. Some content is valid for a limited period of time. Again, changing the clock information on a computer is a known workaround. In some applications, such as for a boat on a cruise, an airliner or a passenger bus, the speed information may become useful to differentiate content used at a fixed location. For example, content may become available at cruising speed only or as a combination of speed and location for the delivery of Digital Right Management (DRM) content outside a country border. The invention, is applicable to the above cases. Authentication can be done for a single location or multiple locations. Authentication can be done for a period of time. It can also be done for a specific speed or a range of speed values. It can also be used as a combination of two or three of location, time and speed information.

Tracking a location of production of a physical or virtual object in a reliable manner is a first object of the authentication system according to the invention.

The system comprises authentication devices 110, decoding devices 120 and one or more authentication centers 130. An authentication authority manages the authentication system.

Authentication devices should be located at the facilities the output of which is to be controlled. The facilities may be manufacturing plants, logistics platforms or data centers. If a facility is large and/or located in different areas, more than one authentication device may be necessary to track the production of the facility with sufficient precision.

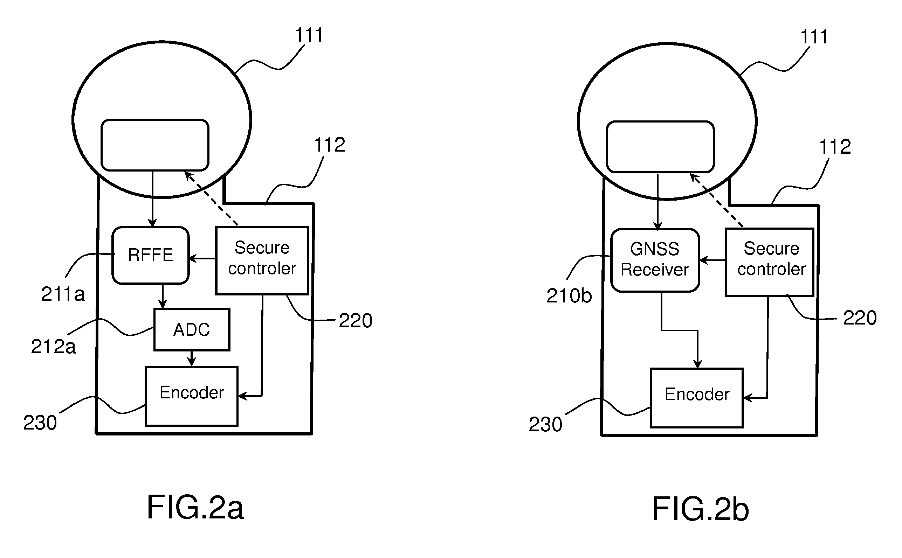

An authentication device 110 according to the invention may have different structures which will be presented further down in the description, in relation to figures 2a and 2b. Common features are a GNSS antenna assembly 111 and a processing configuration 112 comprising a combination of RF signal processing and data processing circuits as well as some software. Indeed, in some implementations, generic circuits may be used, including for the RF signal processing that may be implemented as a Software Defined Radio (SDR) on a generic RF processor. The authentication device, including its antenna assembly, may be physically protected against tampering (physical and/or electromagnetic).

The antenna assembly should be located where reception of the GNSS signals is possible with adequate Signal to Noise Ratio (SNR), to ensure correct and reliable operation. This may mean that the antenna assembly should be located on a roof of the facility and its signals repeated or carried to the processing box whether by a wired connection or by an RF connection. In all such instances, it is advantageous that the connections and repeaters be made tamper- resistant. In certain embodiments that will be presented further down in the description, it may be advantageous that the processing configuration has a connection to the authentication server 130. Also, in this case, the connection itself will advantageously be made tamperresistant.

The authentication device is configured to capture either GNSS RF raw signals or GNSS raw data or a combination of both.

RF raw signals are captured directly from the antenna assembly before being identified as coming from a definite satellite. Signals from all satellites in view at the antenna are therefore mixed, including signals which are modulated by an encrypted code which can currently only be decoded by receivers which are fit for a military use. In the near future, the Galileo commercial service may provide signals modulated by an encrypted code, the keys of which will be accessible to registered civilian users. It will be possible to use these keys to authenticate the Galileo signals received by the receiver. For such a commercial service using authentication keys, the invention may be useful notably to counter replay attacks, i.e. scenarios where the signals are recorded and replayed thereafter.

Even if military or commercial codes cannot be decoded without a specialized decoder, their imprint in a signal may be correlated with the imprint of the same in a reference signal.

Other constellations such as Beidou, GPS, Glonass, Quasi-Zenith Satellite System (QZSS) may also provide signals modulated by an encrypted code. In addition, any other satellites offering global (worldwide), regional or local coverage may be used. Viewed from the receiver, authentication keys are received in a known location, function of the satellite(s) seen by the receiver. In addition the encrypted code may be time dependent (e.g. PNR Code). Finally, receiver speed (e.g. airplane, fast moving vehicle) may be linked to Doppler shift as velocity information.

The GNSS RF raw signal needs to be digitized before being used in the framework of this invention. One milli-second (ms) of digitized GPS RF raw signals will include a minimum of 2 to 2,5 KBytes of data. In some embodiments of the invention, it may be advantageous to capture a first sample of GNSS RF raw signals when a product enters on a production line and a second sample of GNSS RF raw signals when a product exits from the production line. In some embodiments, the samples of GNSS RF raw signals may be decimated portions of the raw signals.

Raw data is the output of calculations performed from the decoded navigation messages encoded in each satellite carrier acquired at the output of the correlation circuits of the GNSS receiver. Some effort has been made by the scientific community and the GNSS industry to define a Receiver INdependent EXchange format (RINEX). RINEX is maintained by the University of Bern (Switzerland) and Unavco Inc (Boulder, Colorado, USA). It is sponsored by the International GNSS Service (IGS) and the Radio Technical Commission for Maritime services (RTCM). RINEX Version 3.03 (July 2015) typically includes at least two types of ASCII data files, an observation data file and a navigation message file. The observation data file includes for each channel code the receiver-to-satellite pseudo-range, the carrier phase, the Doppler and the signal strength (Carrier to noise ratio or C/N0). The navigation message includes for each satellite, among other data, the satellite clock and drift and the satellite ephemerides which give its position in space at an epoch. RINEX format data are more and more often made available by manufacturers at the output of their GNSS receivers so it is an option but it is not mandatory to use RINEX formats to capture raw data to implement the invention. It is indeed possible to use data in a proprietary format, if a manufacturer of a receiver to be used does not provide raw data in RINEX format. For a presentation of different formats in which GNSS raw data may be available, see for instance: http://www-gpsg.mit.edu/-simon/gtgk/Bristol15/pdf/14-Raw to input.pdf.

An extraction of GNSS raw data which is significant for authenticating a GNSS signal will advantageously include the Doppler information. Since the Doppler frequency shift depends on the relative oriented velocities of the satellite and the receiver, if a spoofer is on the ground it is more difficult to fake the Doppler shift than it is to fake the code on the carrier. Including the Doppler shift in the raw data then allows testing the likelihood that a receiver is spoofed by correlating the Doppler shift with the corresponding code measurements or comparing the measured Doppler shift with expected values. See for instance: http://plan.geomatics.ucalgary.ca/papers/plans12 136 plan.pdf.

Appropriate selection of the raw data will reduce the size of the sample to a few hundreds of bytes.

Standard compression techniques may further reduce the size of the authentication data. See for example http://www.gsi.go.jp/common/000045517.pdf.

In some embodiments, GNSS raw signals and GNSS raw data may be combined. For instance, signal parameters (code phase, Doppler shift, carrier phase) may be estimated directly from an image of the signal acquired by a circuit configured to perform open-loop tracking, as disclosed by http://gpsworld.com/collaborative-signal-processing/.

According to the invention, an authentication mark will comprise one or more signatures 113 produced by the processing configuration. A signature should be based on GNSS RF raw signals or GNSS raw data or a combination of both. In some embodiments of the invention, a first signature of a first object in a series will be based on GNSS RF raw signals and a second signature of a second object in the same series will be based on GNSS raw data. Authentication of the second signature will be made conditional upon validation of the first signature.

The signatures comprise an identification of the authentication device and the selected raw signals/raw data. It may also comprise additional information such as a validation of an anti-spoofing procedure, for example of the type disclosed by WO2016/034623, whereby a PRS generates a variable radiation diagram at the antenna assembly.

The data in the signature may be scrambled using a scrambling algorithm known by the authentication authority. Advantageously, the generator of a PRS to drive a radiation diagram may also be used as a scrambler. The signature may also or alternatively be encrypted by a controller comprising a secure processing unit included in the processing box, the secure processing unit (SPU) using private keys. An SPU may have an architecture of the type which is normalized under the ISO/IEC 11889 standard. The SPU may be used to generate the PRS.

Once prepared and optionally encrypted, the signatures may be conditioned in one or more of an authentication message an authentication tag or an authentication location stamp. An authentication message may be sent to an authentication center to be processed there as explained further down in this description. An authentication tag may be combined with the physical object to be marked/authenticated. An authentication location stamp may be combined with a virtual object to be marked/authenticated.

The authentication message may have a predefined structure and be transmitted to the authentication center by the processing configuration through a secure wired or wireless connection and using a secure protocol such as PKI, symmetrical algorithm, or the like. This may be useful for a number of applications, specifically when dealing with the authentication of the site of production of a virtual object, if it is not desired to include GNSS RF raw signals in the bitstream, notably to spare bandwidth because of the size of the authentication data in such a case.

The authentication tag may be conditioned in a format which is readable by an RF transponder. It may then be a Radio Frequency IDentification (RFID) tag or an NFC tag. NFC uses the 13 MHz frequency band and normally operates at a distance of about 10 cm between the tag and the reader. RFID communications may operate at the same frequency band or at 900 MHz (UHF band), which allows communication at a distance of a few tens of meters. NFC becomes popular for effecting transactions like access control or payment while RFID is extensively used for inventory management, short distances of communication ensuring per se security. It is therefore quite well adapted for marking products for authentication. Product nomenclature is already normalized at a very high level by the Electronic Product Code (EPC) Tag Data Standard produced by the GS1 standardization group. The norm also applies to the identification of virtual objects like electronic documents through the EPC Uniform Resource Identifier (URI). These tags had until recently the disadvantage that the volume of data that can be stored thereon was rather limited (a few hundreds of bytes maximum), which made them adapted for a GNSS raw data signature but not for a GNSS RF raw signal signature. But some evolution towards larger storage capacity now make them fit for both purposes. See for instance: http://www.fujitsu.com/global/solutions/business-technology/intelligent-society/ait/tags/. The AIT-C08BCB chipset has a user memory capacity of about 8 Kbytes. An RFID tag specifically designed to allow storage of historical data for avionics parts is also offered by Fujitsu, that has a user memory of 64 Kbytes and would be suitable for authenticating usage and maintenance of high value parts across their lifetime. It is also possible that new formats develop, specifically tailored for authentication of products or operations. One of the best suited physical layers adapted for that purpose may very well be UHF transmission.

QRCodes are 2D bar codes which therefore may be read using optical readers. QRCodes are more and more popular, notably to give automatic access to an URL. They also use the EPC standard and permit storage of up to 7 kBytes of digital data. As indicated above, this allows storage of 2 to 3 ms of GNSS RF raw signals plus selected GNSS raw data.

The signatures may also in all or in part be conditioned as a bitstream to be appended to an electronic file, to authenticate the computing unit which has processed the electronic file.

To condition the signatures in the three embodiments mentioned above, the processing box may include an encoder to produce the signatures forming the authentication mark to be included in an authentication message or an authentication tag.

New tag formats may be used in the future and the devices and methods of the invention will be easy to adapt thereto.

Authentication location stamps are streams of bits, preferably encoded using asymmetric keys and/or PRNG of the secure processor, said streams of bits being produced by the authentication device to be either appended to a bitstream representative of an operation performed by a processing device or posted on a server for access by other processing devices or verification/validation logic. Further access may be provided through a Publish/Subscribe protocol as known by a man of ordinary skill. The processing device may be an electronic device, such as an ATM, a personal computer, a smart phone, a server, provided that it can be coupled to an authentication device according to the invention. Coupling is straightforward in the case of room size operating devices. In the case of smart phones that have a secure processor, processing logic may be implanted to implement the invention. Alternatively, a miniature authentication device according to the invention may be provided in the form of a protection accessory of the smart phone, the accessory comprising a secure processor and processing logic to retrieve, among other data, the positioning raw data from the GNSS chipset of the smart phone, which are made more and more easily available, for example for Android smart phones.

In embodiments in relation to data processing, authentication location stamps or messages can be appended to the data they authenticate or travel separately. In both cases, specific check variables may be included in the data to ensure integrity of the same.

Authentication location stamps may contain only location or position information. They may contain only velocity information. They may contain only time information. They may contain any combination of two or three of position, velocity and time. In this specification, we use the term Authentication location stamps to cover any of these implementations.

The implementation of the invention according to these embodiments is compatible with different network and/or computing architectures. The transport layer may be terrestrial, satellite or radiofrequency communications. The network may be virtualized (Network Function Virtualization or NFV). The network may be a legacy network. It may also be a new kind of network developed under the Next Generation Mobile Networks paradigm for the 5G transmission layer. The network and/or computing architectures may be fully virtualized like in an NFV architecture or managed using a simple combination of Virtual Machines operated using a UNIX operating system and a Hypervisor. In some embodiments, the network may be sliced, thus allowing different Quality of Service levels in different regions of the network. It may be therefore advantageous to be able to track the data streams across the various QoS regions.

When relying on authentication tags, the authentication system of the invention also comprises, in some embodiments, a verification/decoding device 120. The decoding device comprises a tag reader (RF or optical) adapted to capture the data from the authentication tag.

In a number of embodiments of the invention, the authentication mark may be partly validated locally and partly validated through a connection to an authentication center. Local validation may be performed to check whether some goods that come from the same origin and/or belong to the same series as the goods under inspection have already been detected as in violation. This can easily be done in some embodiments by accessing lists of these goods stored in a local memory of the verification device. These lists can be updated in near real time by the authentication center. In this case, a denial of validation or a doubt will be emitted, without a need to send a request to the authentication center, and the next step will depend on the standard operating procedure defined by the authentication authority.

Alternatively, validation can be granted by the verification device when a first good in the same series has been authenticated and was produced at the same site, preferably no more than a predefined time period before the presumed time of production of a second good now under review. In this case, possibly subject to a tighter standard of verification of the first good, validation of the second good may also be granted without a need to send a request to the authentication center.

In some embodiments, the authentication data decoded by the verification device 120 is sent to the authentication center 130 referenced in the EPC of the good associated with the authentication tag. The authentication center then executes the verification procedure described further below and returns a validation, a denial or a doubt signal or information conveying a level of confidence in the result. The verification device may be operated by a customs or a police officer, as example by the way of a smartphone. It may also be operated automatically in a warehouse or at the goods incoming control of a manufacturer or a distributor. In this operating mode, verification requests may be sent to the authentication center in batches instead of in real time. The goods will only be cleared when the verification messages will be returned by the authentication center.

It is also possible that the verification device operates like a probe in a node (a switch, for instance), receiving an incoming data stream, the origin of which is to be verified. The verification device may then include processing logic to stop the incoming data stream at the node to prevent dissemination to other nodes if the authentication location stamp cannot be verified. Alternatively, the verification device may let the incoming data stream pass to other nodes and store locally and/or send to a distant machine a specific message including information on the unauthentic data stream.

In some embodiments of the invention, a verification device can be provided in the form of a combination of a device comprising a GNSS antenna, GNSS signals processing channels (plus a GNSS baseband processor if raw data is to be accessed), authentication tag or location stamps decoding/reading capabilities and processing logic to compare the authentication data retrieved from the authentication tags or location stamps with GNSS raw data or raw signals at the output of the GNSS processing channels or baseband processor. The verification device according to these embodiments of the invention will be used by delegates of an authentication authority who will visit the sites of performance of the operations which are to be authenticated. Authentication will result from an acceptable match between the authentication mark comprising data in the authentication tag/location stamp and the GNSS raw signals/data produced by the verification device.

In some embodiments of the invention, an authentication center 130 is managed by an authentication authority. A plurality of authentication centers may be managed by a single authentication authority. A plurality of authentication authorities may operate according to the invention. The authentication center is to be managed as a secure facility, both in terms of physical security and of network/computing resources security. The authentication center comprises a server with computing resources, a database connected to the server, the database comprising identification data of authentication devices and verification devices registered with the authenticating authority managing the authentication center.

In a number of embodiments, the database includes, directly or through a secured access to a manufacturer/operator database server, a table listing valid product ID references for definite periods of time. If the ID of a product to be checked is not listed in the database, there is no need to go further in the authentication process: the product under control is rated as being a fake and this information may be processed according to the procedures defined by the authentication authority and stored in the database.

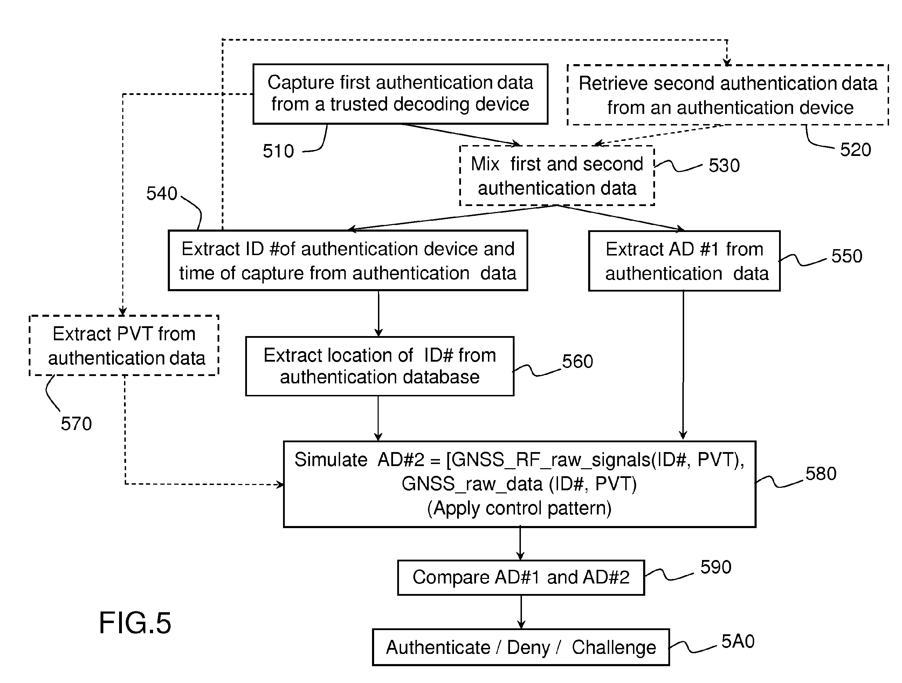

The authentication server receives authentication requests from verification devices 120. The authentication process will be discussed in more details further down in relation with the description of figure 5.

The authentication server is connected to a GNSS signal simulator 131. The signal simulator may for instance be of the type of those marketed by Spirent™, such as the GSS9000 GPS/GNSS Constellation Simulator, by Navsys™, such as the SatGen Signal Simulation Software, or by SpectraCom™, such as the GSG Series 5 or Series 6 products. The GNSS signal simulator will be driven by a first computing logic in the server to reproduce the GNSS RF raw signals and/or GNSS raw data expected at the location identified in the database connected to the server as being the location of the authentication device having generated the authentication tag or message. In an embodiment, the expected signal and/or data will be generated for the time interval specified in the authentication tag or message. The database may also include the configuration data sheet of the authentication device (antenna assembly configuration, RF signal processing channels, baseband processor, etc...), so that the parameters to be used in the simulation may be tuned.

In some embodiments of the invention, the authentication server may also be connected to a control pattern generator 132. The control pattern generator should be able to reproduce a pseudo-random sequence (PRS) used by a controller in the authentication device, to generate an antenna radiation pattern to detect spoofing, and/or to scramble the authentication data before conditioning the same in the authentication message or tag. This means that the authentication server must store the Pseudo Random Number Generators (PRNGs) used to generate the PRS and their seed or other suitable data allowing reconstruction of the PRS. The application of the control pattern to the simulated signals/data produces a reference signature 133.

The authentication center also manages the encryption public keys, when an encryption scheme is applied in place or in addition to the PRS.

The reference signature is compared by a second computing logic 134 to the data to be authenticated which has been previously decrypted. The data to be authenticated may be sent from an authentication device 110 or from a verification device 120.

The server is then able to output a response to the authentication challenge to be processed according to the standard operating procedures defined by the authenticating authority. The response may be a validation that the data is authentic, a denial of authenticity or a doubt about the adequate response. In some embodiments, the response may be a probability that the good is authentic, said probability varying between 0% and 100%, a probability higher than 60% being, for example, equivalent to a determination of authenticity, a probability lower than 40% being equivalent to a denial of authenticity and a probability between 40% and 60% being equivalent to a doubt. In this last event, the authenticating authority's standard operating procedures should define how such a doubt should be handled. In some embodiments, the procedure may for instance require that a challenge be sent to the authentication device to send GNSS RF raw signals to the authentication center.

Figures 2a and 2b represent two different embodiments of the authentication device of the invention.

The two configurations of figures 2a and figures 2b are different in that the configuration of figure 2a does not include a full GNSS receiver and is optimised in producing GNSS RF raw signals whereas the configuration of figure 2b includes a full GNSS receiver which produces GNSS raw data. It is to be noted that a GNSS receiver may be also configured to output GNSS RF raw signals, provided it has an adequate output port.

The antenna assembly 111 of figure 1 is identical in the two configurations of figure 2a and figure 2b. The antenna assembly may be housed in a radome which is useful to mitigate multipath, protect against jamming and offer a protection against tampering. The assembly may comprise more than one antenna, such a configuration offering a better ability to detect jamming or spoofing because measurement of the Direction of Arrival (DoA) of the signals is thus possible thus rendering detection of fixed spoofers possible. The assembly may comprise antenna elements which are configured to generate a pseudo-random radiation pattern as disclosed in WO2016/034623, such pseudo-random radiation pattern being generated in response to a PRS produced in the secure controller 220, as will be discussed further down in the description.

In the embodiment of figure 2a, an RF Front-End (RFFE) 211 a receives the GNSS RF signals from the antenna assembly 111, filters the out-of-band signals and amplifies weak signals. Optionally, the RFFE may comprise a circuit to down-convert the signal to an intermediate frequency if the Analog to Digital Converter 212a which is used has not enough bandwidth to process the signals at the incoming frequency with the adequate sampling frequency. Then the ADC sends the digitized raw signal to the encoder 230, which is also common to the two configurations.

In the embodiment of figure 2b, a GNSS receiver 210 receives the GNSS RF signals from the antenna assembly. It comprises the RFFE and the ADC of the embodiment of figure 2a. In addition, it also includes the baseband processor that includes correlation channels which identify the signals from each satellite in view in the incoming signals, extracts the code and phase in each channel, calculate the receiver-to-satellite pseudo-range and send this raw data to a PVT calculation stage which fuses this data, possibly with external navigation aids (inertial/map matching, etc.). According to the invention, raw data is captured before the PVT calculation stage to be sent to the encoder. As indicated above, raw signal may also be captured at the output of the ADC stage of the GNSS receiver to be sent in parallel to the encoder.

The secure controller 220 has the same functions in the two configurations. It may consist of a Trusted Platform Module (TPM) developed under the specifications of the Trusted Computing Group (ISO/IEC 11889). A TPM is a microcontroller which is dedicated to the execution of encryption, decryption and authentication functions. The TPM may be used to generate a first PRS to drive the radiation pattern of the antenna assembly. The TPM may be used to generate a second PRS to scramble the authentication data before encoding. The TPM may be used to encrypt the authentication data/mark. In lieu of a TPM, it is also possible to use a Hardware Security Module (HSM). HSMs are tamper-resistant dedicated heavy duty crypto-chips which are capable of executing a few thousand RSA 2048 bits encrypt/decrypt operations per second. Both types of modules can provide an immutable unique identification value physically linked to the physical root of trust, or authentication keys with remote attestation mechanism, that can be used as identification of any computing or storage platform and may guarantee the integrity of any software or data processed by the platform.

The PRNG of the secure controller may be also used to generate control sequences to shape a variable radiating diagram at the GNSS antenna 111, as disclosed by WO2016/034623 which is assigned to the licensee of the instant application. It may also be used to generate a variable intermediate frequency which is shifted from a baseband frequency by a variable offset. These embodiments are specifically advantageous to include additional security features to the authentication method of the invention. They may be advantageously implemented, alone or in combination, with the Galileo commercial service, when made available.

The encoder 230 has also the same functions in the two configurations. In essence, it conditions the data which have been prepared under the control of the secure controller to the format that will constitute the authentication tag or message. As already explained, the tag may be a QRCode, an RFID or NFC tag or a simple bitstream. It will be physically affixed to the physical object to be authenticated or embedded in the virtual object to be authenticated. The message will be conditioned as a data stream in a secure message according to a predefined protocol and sent to the authentication center.

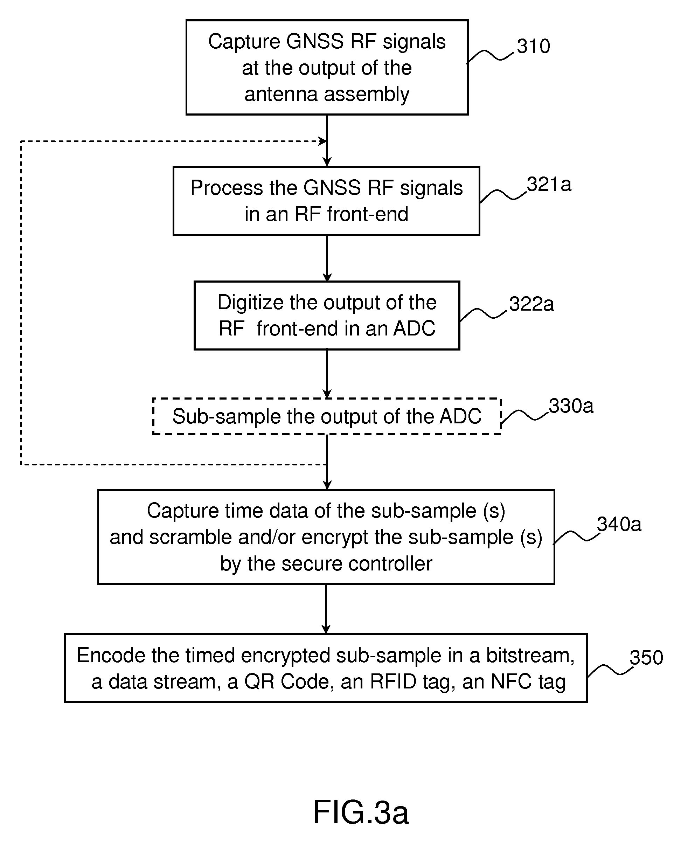

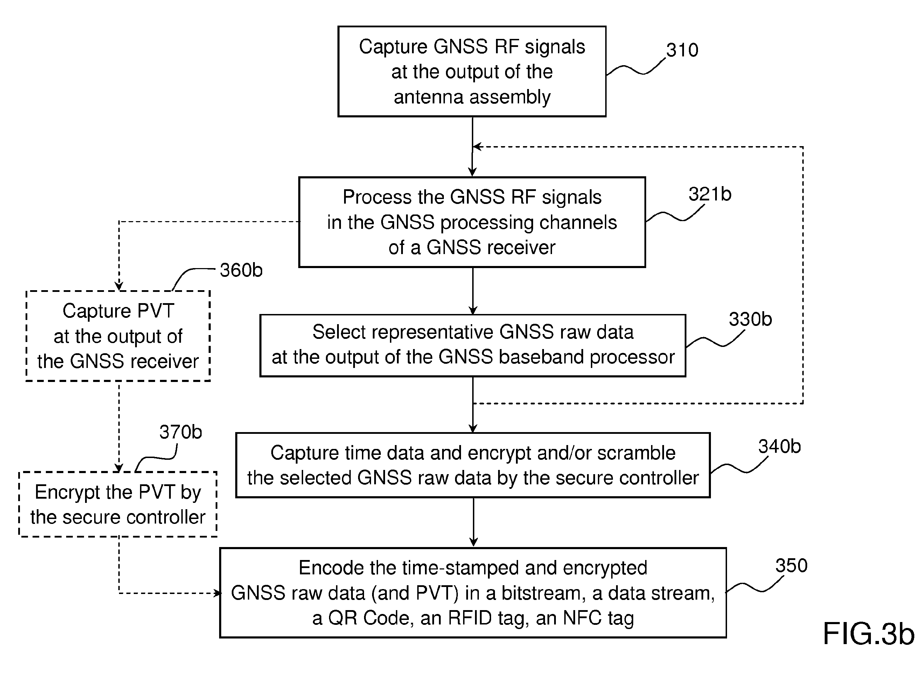

Figures 3a and 3b represent flow charts of encoding processes according to two different embodiments of the invention.

Figure 3a represents a flow chart adapted to the structure of the authentication device of figure 2a.

At a first step 310, the GNSS RF signals are captured at the output of the antenna assembly. The antenna assembly radiating pattern may have been driven by a PRS generated by the secure controller 220.

At a second step 321 a, the GNSS RF signals are processed by the RFFE 211a, and at a third step 322a, the output of the RFFE is digitized by the ADC 212a.

At an optional fourth step 330a, the digitized GNSS RF signals from the output of the ADC may be sub-sampled by a decimation procedure.

Also, optionally, a plurality of samples or sub-samples of the GNSS RF raw signals may be captured at a plurality of time intervals. Due to the limitation of the volume of data which may be encoded in an authentication tag, the plurality of samples may be limited to two. But other encoding formats may, in the future, allow more samples to be captured and encoded.

Also, samples or sub-samples of the GNSS RF raw signals may be sent from time to time by the authentication device to the authentication center, so that the RF raw signals and corresponding raw data embedded in an authentication tag and their serial numbers may be correlated at the authentication center.

At a fifth step 340a, the sample(s) or sub-sample(s) of the GNSS RF raw signals are supplemented by time data retrieved from a clock of the secure controller and then the combined data stream is scrambled and/or encrypted under the control of the secure controller 220 as explained above.

At a sixth step 350, the output of the previous step is encoded to be conditioned into a bitstream, a data stream, a QRCode, an RFID tag or an NFC tag.

The authentication mark is then ready to be either affixed to a physical object at the output of the production chain, combined with a data stream or sent to the authentication center.

Figure 3b represents a flow chart adapted to the structure of the authentication device of figure 2b.

The first step 310 is identical to the step 310 of figure 3a.

The second step 320b is performed in the processing chain of the GNSS receiver 210b, including its baseband processor. The data is captured at an output port of the processing chain in a RINEX compliant format or in another format.

The third step 330b consists in selecting relevant GNSS raw data at the output of step 320b. The selection can be always the same, adapted as a function of the application or adapted as a function of a monitoring that the authentication authority may decide on a specific target production site because of repeated doubts.

Optionally, GNSS raw data may be captured at different time periods, so that captured raw data may be compared to evaluate, for instance, an evolution of the Doppler shift, which may give an indication of a likely presence of a spoofer. Such a comparison may be performed locally in the processing logic of the authentication device or by the authentication server of the authentication center. For the comparison to be performed locally, Doppler data at a first time may be stored in a memory of the authentication device and then compared to a current raw data to derive an indication of a probability of spoofing. The estimated receiver's clock bias may also be used instead of or along with Doppler shift, to serve the same purpose.

The fourth step 340b is similar to the fourth step of the method described in relation to figure 3a.

Optionally, the PVT data corresponding to the GNSS raw data may be captured at a step 360b and then encrypted under the control of the secure controller at a step 370b.

The last step of the method 350 is identical to the same step described in relation with figure 3a, as well as the post-processing step of affixing the authentication mark to the object to be authenticated, sending an authentication message to the authentication server or combining the authentication mark with a virtual object.

It is to be noted that the embodiments of figures 3a and 3b may be optionally combined in the configuration of figure 2b. In this variant the steps of figures 3a and 3b may be performed in parallel or in sequence.

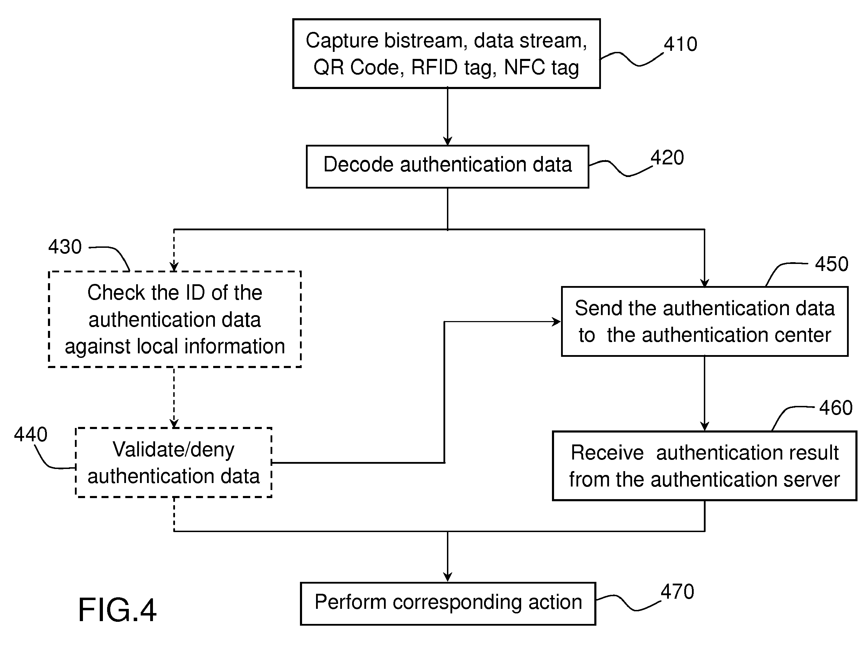

Figure 4 represents a flow chart of a verification process of an authentication tag in a decoding device of the invention in a number of its embodiments.

At a step 410, the authentication tag is captured from the bitstream, the QRCode, the RFID or the NFC tag it is embedded in. It is then decoded from the encoding format of the data at a step 420.

If the data is encrypted and/or scrambled, it may be only checked locally if the decoding device possesses the PRNG and seed and/or decryption keys used to scramble/encrypt the authentication data. This requires more processing power and memory than a standard decoding protocol and may compromise the security of the system. Therefore, these local authentication steps may be adapted for some applications and not all, and they may be seen as optional. In some variants, the ID of the originating authentication device may not be encrypted to be accessible in clear format to the decoding device.

In case, they are performed, these local steps include a step 430 where the ID of the authentication device from which the authentication mark originates may be checked against a list of valid or invalid authentication devices. Appropriate conclusion is derived from this check at a step 440. Also, some data in the authentication mark may be checked locally, for instance if an indication of a probability that the GNSS signals are spoofed has been included in the authentication mark. This indication may be included in clear format (i.e. unencrypted) to allow the use of this indication by the verification device without the need to decrypt it.

When a local verification procedure is not performed or if this local verification procedure is not conclusive, the decoded authentication mark is sent to the authentication center 130 at a step 450 to be processed there.

The authentication center returns the result of its check at a step 460.

The verification device then performs an adequate action at a step 470. Possible actions are determined by the standard operating procedures defined by the authentication authority. Examples of actions include: seizing the goods, if the holder of the verification device has the authority to do so, reporting the fact that the controlled goods are not authentic, etc... In case, the control is performed by an unmanned device applied to data streams, the action may result in forbidding further dissemination of the data stream.

As explained above, other types of verification processes not shown of the figure may exist, which combine a decoding of the authentication tag or location stamp produced at the site of performance of the operation of the operating device to be authenticated with a capture of the GNSS raw signals and/or data at the same site by a GNSS receiving capability provided with the verification device and a comparison of the output of the decoding with the output of the receiving.

Figure 5 represents a flow chart of a verification process of an authentication tag in an authentication server according to the invention in a number of its embodiments.

At step 510, the authentication server captures first authentication mark sent by a verification device.

At an optional step 520, the authentication server retrieves second authentication mark comprising data received from an authentication device 110, said second authentication data having a correspondence with the first authentication data. This may be the case, for instance, when the authentication device produces a first set of authentication data comprising GNSS raw data only which is included in an authentication tag combined with the object, physical or virtual, of which the location and/or time of production must be authenticated, and a second set of authentication data comprising GNSS RF raw signals which are conditioned in an authentication message sent to the authentication center. It is to be noted that the transmission of the authentication message (i.e. the second authentication data) and the reception of the authentication data contained in the authentication data combined with the object will be most of the times asynchronous, which means that the authentication message will have to be stored in the database connected to the authentication server, with an identifier (ID of the authentication device and timestamp interval of production).

When an authentication message exists in the database, the first and the second authentication data should be combined at a step 530.

At step 540, the ID# of the authentication device 110 recorded in the authentication data is extracted from the database. The time interval of capture is also retrieved. It is to be noted that, when a second authentication data is to be used, the step of extracting the ID# of the authentication device and the time interval of capture is to be performed before the retrieval of the second authentication data.

Data AD#1 to be used in the authentication process is extracted from the authentication data at step 550.

The location of the authentication device corresponding to the ID that is stored in the database is extracted at step 560.

PVT data may also be extracted from the authentication data at step 570. PVT data may consist of position data, velocity data or time data or a combination of two or three of the latter. Indeed, in some instances, velocity may be more meaningful, because said velocity data is less affected than the position data by error range. Also, in some other instances, certified time data may be very valuable. The invention, in these embodiments, accommodates all these needs.

Data AD#2 corresponding to the location and time interval of production are generated by the GNSS signals simulator 131 and possibly processed with the control pattern generator 132 at step 580. Data AD#2 may comprise a plurality of samples of GNSS RF raw signals and of GNSS raw data, the simulation corresponding to the location of the authentication device of ID# at the time interval recorded in the authentication data (possibly at the PVT recorded in the authentication data).

Data AD#1 and AD#2 are compared at a step 590.

Action to authenticate, deny or challenge is then triggered at step 5A0, such step being optionally defined by the standard operating procedures defined by the authenticating authority. The action may include transmitting the result of the authentication process to the verification device. It may also include triggering other actions like updating the list of the authentication devices with an information recording the statistics of verification or triggering a specific action, such as sending notifications to governmental bodies or preventing further dissemination of the objects, when the objects may be intercepted.

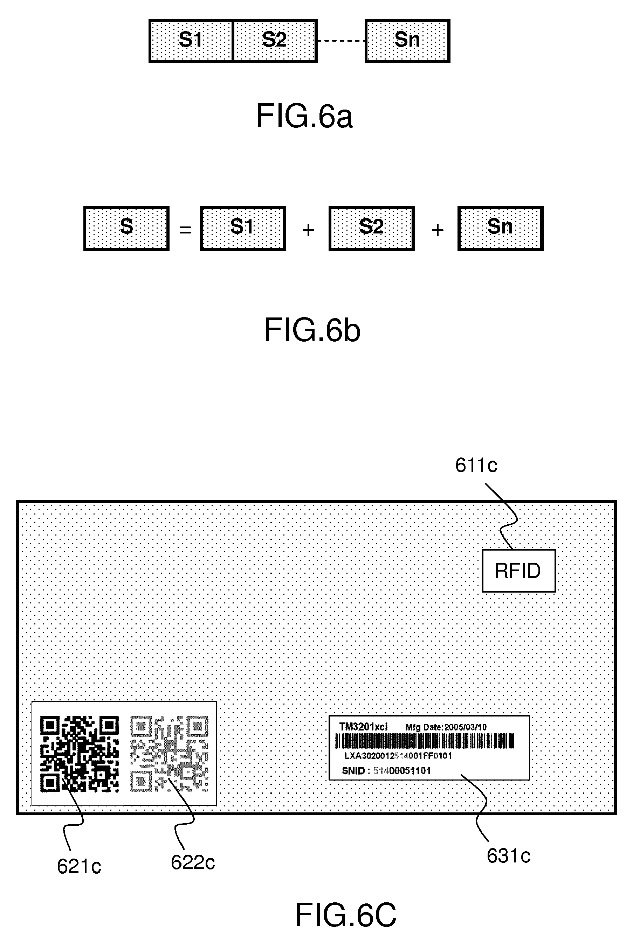

Figures 6a, 6b and 6c illustrate combined authentication tags of the invention in a number of its embodiments.

According to some variants of the invention, authentication data may be combined through a plurality of operations performed across a chain of production/distribution.

In a variant depicted on figure 6a, the authentication data are simply juxtaposed in a single data block (S1, S2, ... Sn) or a plurality of data blocks. The authentication data may be stored in a same tag, when the latter can be rewritten, as is the case of RFID tags, or added to a bitstream, in case the object to be authenticated is virtual. When a QRCode is used, a plurality of tags may be affixed to the physical object at each main step of production (see below).

In another variant depicted on figure 6b, a new authentication data is generated at each production/distribution step by a combination algorithm defined by the authenticating authority. In some embodiments, an encoding device located at a second production facility is capable of authenticating a first production facility where the previous production step took place. Said authentication may for instance be performed by a standard reader of the type described above in relation to figure 4. Then, the encoder of the second production facility may re-encode a chain comprising the authentication data received from the first production facility and its own authentication data, using its own scrambling and/or encryption keys. Thus a single bitstream or tag may be produced, replacing the previous bitstream or tag.

In another variant depicted on figure 6c, which also illustrates some other aspects of the invention, authentication marks/data from different operations may be recorded in different tags which are part of a same authentication macro-tag affixed to a same physical object. An RFID tag 611c may include data which can be chained or juxtaposed from an operation to the next. The memory of the tag may be configured in such a way that data may be re-inscribed on the tag in certain areas and not in others. Multiple QRCodes 621 c, 622c may be affixed to the object, each one of them comprising authentication data representative of an operation. Identification data and time of performance of a first, a final or an intermediate selected operation may be recorded in a bar code 631 c.

In some embodiments of the invention which apply to electronic transactions, it is possible to chain the authentication data in such a way that each step of a transaction if separately authenticated as well as the chain of transactions. In such a system, the authentication data (i.e. authentication location stamp of each transaction) may either travel with the transaction data streams and/or be stored in a remote facility to be further authenticated. In this type of embodiments of the invention, it is advantageous to use the GNSS time information which is part of PVT and that can be used per se to ascertain each step of the transaction and the sequence of steps.

In yet other variants of the invention, authentication marks/data in relation to a chain of operations may be recorded on a smart card. By way of example only, when goods have to be delivered at various places, the driver of the delivery means (truck, boat, aircraft, etc.) may be required to authenticate the place of delivery by recording on a smart card he/she carries with him/her authentication data produced by an authentication device located at the place of delivery.

In yet other variants of the invention, a serial number of an object may be affixed to the object to be authenticated, as is usually the case. Then this product ID may be used to access a server in the authentication center where some or all of the authentication data of the steps for manufacturing the product is stored. The serial number may itself be combined with information which is representative of each production step.

It is to be understood that the present invention has been described for a number of GNSS constellations which currently exist and of tag or data formats currently used. But the principles of the invention can be easily adapted to new positioning means or tag or data formats.

The examples disclosed in this specification are therefore only illustrative of some embodiments of the invention. They do not in any manner limit the scope of said invention which is defined by the appended claims.

## Claims

1. Authentication mark to authenticate one or more of locations or times of performance of one or more operations by one or more operating devices, said authentication mark comprising data representative of :
- identification of one or more authentication devices, each comprising a GNSS antenna (111) and one or more GNSS signal processing channels (211 a, 212a, 210b), each authentication device associated with an authorized site of performance of an operation by an operating device; and
- A sample of one or more of GNSS raw RF signals or GNSS raw data captured from the one or more GNSS processing channels.

2. The authentication mark of claim 1, wherein the sample of one or more of GNSS raw RF signals or GNSS raw data comprises data from which a time interval and a Doppler shift of a GNSS carrier from one or more satellites at a beginning and an end of the time interval may be extracted.

3. The authentication mark of one of claims 1 to 2, further comprising PVT of the one or more authentication devices.

4. The authentication mark of one of claims 1 to 3, being representative of a plurality of sites of performance of operations by said operating devices.

5. An authentication tag comprising authentication mark according to one of claims 1 to 4, the authentication mark comprising data encoded in one or more of a bar code, a QR-Code, an RFID or an NFC format.

6. A physical object, having combined therewith an authentication tag according to claim 5.

7. An authentication location stamp comprising authentication mark according to one of claims 1 to 4, the authentication mark comprising data representative of one or more of locations or times of performance of one or more operations by one or more processing devices.

8. A bitstream carrier, having combined therewith an authentication location stamp according to claim 7.

9. An authentication device configured to produce authentication data of one or more of a location or a time interval of performance of an operation by an operating device, said authentication device comprising:
- A GNSS antenna assembly (111);
- One or more GNSS signal processing channels (211 a, 212a, 210b) having one or more of GNSS RF raw signal output ports or GNSS raw data output ports ;
- A controller (220) configured to:
o Capture samples of the one or more of GNSS RF raw signal and GNSS raw data at the output ports of the GNSS signals processing channels at the time interval and location of performance of the operation by the operating device;
o Generate an authentication mark comprising data representative of an identification of the authentication device and the samples of the one or more of GNSS RF raw signal and GNSS raw data; and
- An encoder (230) configured to condition said authentication mark in one or more of an authentication tag, an authentication location stamp and an authentication message.

10. The authentication device of claim 9, wherein the controller comprises a secure processing unit with one or more of cryptographic or pseudo-random number generation (PRNG) functions.

11. The authentication device of claim 10, wherein a PRNG of the secure processing unit is used to generate control sequences to shape a variable radiating diagram at the GNSS antenna.

12. The authentication device of one of claims 10 to 11, wherein the GNSS signal processing channels are configured to use a variable intermediate frequency which is shifted from a baseband frequency by a variable offset, said variable offset being generated by a PRNG of the secure processing unit.

13. An authentication server configured to authenticate an authentication mark representative of one or more of a location or a time of performance of an operation by an operating device, said authentication server comprising:
- An access to a database comprising identification data of authentication devices declared as being located at authorized sites of performance of operations by the operating device;
- An access to an authentication mark comprising data deemed to be representative of an identification of an authentication device, a time interval of production of said authentication data and of first one or more of GNSS RF raw signal or GNSS raw data captured during said time interval;
- An access to a GNSS signal simulator;
- First computer logic configured to retrieve from the database the location of the authentication device at the time of encoding and to cause the GNSS signal emulator to generate one or more of second GNSS RF raw signals or GNSS raw data corresponding to the location of the authentication device during the time interval;
- Second computer logic configured to compare the first one or more of GNSS RF raw signal or GNSS raw data and the second one or more of GNSS RF raw signal or GNSS raw data and to determine whether the data in the authentication mark is likely to be authentic based on the output of the compare.

14. A method of producing an authentication mark for authenticating one or more of locations or times of performance of one or more operations by one or more operating devices, the method comprising:
- Capturing samples of one or more of GNSS RF raw signals and GNSS raw data at output ports of GNSS signals processing channels in an authentication device located at a time and location of performance of the one or more operations by the one or more operating devices;
- Generating an authentication mark comprising data representative of an identification of the authentication device and the samples of the one or more of GNSS RF raw signal and GNSS raw data; and
- Conditioning said authentication mark in one or more of an authentication tag, an authentication location stamp and an authentication message.

15. The method of claim 14, wherein the authentication mark comprising data representative of a first operation comprises GNSS RF raw signals conditioned in an authentication message and are sent to an authentication server and the authentication mark comprising data representative of a second operation comprises GNSS raw data conditioned in one of an authentication tag or an authentication location stamp combined with a product of the second operation.

16. A method for authenticating an authentication mark comprising data representative of one or more of locations or times of performance of one or more operations by one or more operating devices, said authentication method comprising:
- Accessing a database comprising identification data of authentication devices located at authorized sites of performance of the one or more operations by the one or more operating devices;
- Accessing an authentication mark comprising data deemed to be representative of an identification of an authentication device, a time interval of production of said authentication data and of first one or more of GNSS RF raw signal or GNSS raw data captured during said time interval;
- Accessing a GNSS signal simulator;
- Causing a first computing logic to retrieve from the database the location of the authentication device at the time of production of said authentication mark and to cause the GNSS signal simulator to generate one or more of second GNSS RF raw signals or GNSS raw data corresponding to the location of the authentication device during the time interval;
- Causing a second computing logic to compare the first one or more of GNSS RF raw signal or GNSS raw data and the second one or more of GNSS RF raw signal or GNSS raw data and to determine whether the authentication mark is likely to be authentic based on the output of the compare.

17. The method of claim 16, for authenticating a first authentication mark, further comprising receiving an authentication message from the authentication device wherein said authentication message comprises GNSS RF raw signals captured by the same authentication device at a time interval of performance of a second operation by the same operating device, said second operation having an identification in a same series as the identification of the first operation, wherein the authentication mark comprising data of the first operation comprises GNSS raw data and the authentication data of the second operation comprises GNSS RF raw signals and the second computing logic only outputs a validation for the first operation if it first ouputs a validation for the second operation.
